# EUROPEAN PATENT APPLICATION

(11) **EP 1 391 467 A1**
(43) Date of publication of application: **25.02.2004**
(21) Application number: 02358016.0
(22) Date of filing: 20.08.2002
(51) Int. Cl.: C08F 4/64, C08F 10/00

(54) **Polymerisation catalyst**

(71) Applicant: BP Lavéra SNC, 95866 Cergy Pontoise Cedex (FR)
(72) Inventor: The designation of the inventor has not yet been filed
(74) Representative: De Kezel, Eric

(57) **Abstract**

A process for the preparation of a silicon containing metallocene catalyst component comprises the steps of
(a) non-hydrolytic sol-gel condensation of a (cyclopentadienyl) dihalogenated silane with an halogenated silane and an alkoxysilane,
(b) deprotonation, and
(c) addition of a Group IVA metal compound.

The novel method allows for the preparation of metallocen catalyst which may suitably be used with activators for the polymerisation of olefins, in particular for such processes carried out in the gas phase.

## Description

The present invention relates to the preparation of polymerisation catalysts, and in particular to the preparation of silica containing metallocene catalyst components for use in the polymerisation of olefins.

In recent years there have been many advances in the production of polyolefin homopolymers and copolymers due to the introduction of metallocene catalysts. Metallocene catalysts offer the advantage of generally a higher activity than traditional Ziegler catalysts and are usually described as catalysts which are single site in nature.

There have been developed several different families of metallocene complexes. In earlier years catalysts based on bis (cyclopentadienyl) metal complexes were developed, examples of which may be found in EP 129368 or EP 206794. More recently complexes having a single or mono cyclopentadienyl ring have been developed. Such complexes have been referred to as 'constrained geometry' complexes and examples of these complexes may be found in EP 416815 or EP 420436. In both of these complexes the metal atom eg. zirconium is in the highest oxidation state.

Other complexes however have been developed in which the metal atom may be in a reduced oxidation state. Examples of both the bis (cyclopentadienyl) and mono (cyclopentadienyl) complexes have been described in WO 96/04290 and WO 95/00526 respectively.

The above metallocene complexes are utilised for polymerisation in the presence of a cocatalyst or activator. Typically activators are aluminoxanes, in particular methyl aluminoxane or compounds based on boron compounds. Examples of the latter are borates such as trialkyl-substituted ammonium tetraphenyl- or tetrafluorophenylborates. Catalyst systems incorporating such borate activators are described in EP 561479, EP 418044 and EP 551277.

The above metallocene complexes may be used for the polymerisation of olefins in solution, slurry or gas phase. When used in the gas phase the metallocene complex and/or the activator are suitably supported. Typical supports include inorganic oxides eg. silica or polymeric supports may alternatively be used.

Examples of the preparation of supported metallocene catalysts for the polymerisation of olefins may be found in WO 94/26793, WO 95/07939, WO 96/00245, WO 96/04318, WO 97/02297 and EP 642536.

Supported metallocene catalysts may be prepared by use of sol-gel techniques.

Silicate gels are typically prepared by hydrolyzing monomeric tetrafunctional alkoxide precursors utilizing a mineral acid or base as a catalyst. For example the hydrolysis and condensation of tetraethoxysilane in a sol-gel process catalysed by ammonia results in a sol-gel powder which may be used as an organometallic catalyst support.

In *J. Applied Polymer Science Vol. 78, 2318 - 2326 (2000)* there is described silica supports for metallocenes prepared by the gelation of a stable colloidal phase of silica using MgCl₂ as initiator. *Polymer Bulletin 46, 175 - 182 (2001)* describes the synthesis of metallocene catalysts supported on silica type sol-gel carriers. The silica gels were prepared in a wet sol-gel procedure by hydrolysis and condensation of tetraethoxysilane in a mixture of water, ethyl alcohol and ammonia. *Polymer 42, 2001 pgs 4517 - 4525* describes the preparation of supported metallocenes by use of xerogels based on the hydroylsis and condensation reactions between tetraethoxysilane and bis(indenyl)diethoxysilane. In all the above preparations the resultant supported catalysts were employed in the polymerisation of ethylene.

We have now surprisingly found that sol-gel techniques which utilise a non-hydrolytic procedure may be successfully used in the preparation of silica containing metallocene catalyst components for the polymerisation of olefins.

Thus according to the present invention there is provided a process for the preparation of a silicon containing metallocene catalyst component, said process comprising the steps of
(a) non-hydrolytic sol-gel condensation of a (cyclopentadienyl)
(b) dihalogenated silane with an halogenated silane and an alkoxysilane,
(c) deprotonation, and
(d) addition of a Group IVA metal compound.

The (cyclopentadienyl) dihalogenated silane is typically a dichlorinated compound.

The preferred silanes are those having one or two cyclopentadienyl ligands however bis(cyclopentadienyl) compounds for example bis(cyclopentadienyl)dichlorosilanes or bis(indenyl)dichlorosilanes are most preferred.

The preferred alkoxysilanes are ethoxysilanes for example tetraethoxysilane.

The preferred halogenated silanes are chlorosilanes for example tetrachlorosilanes or dimethyldichlorosilanes.

The deprotonation step may be carried out by use of well known deprotonation agents for example n-butyllithium.

The Group IVA metal compound may typically contain zirconium, titanium or hafnium metal and is preferably a halogented compound. Preferred compounds are zirconium tetrachloride or titanium tetrachloride.

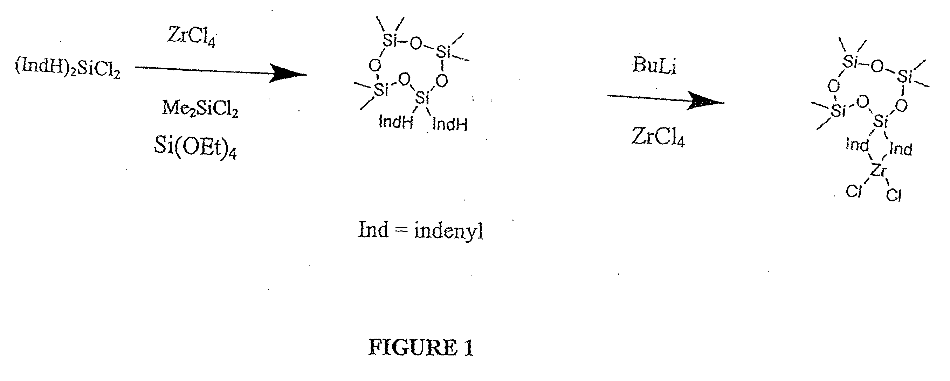

The process according to the present invention may be illustrated with reference to Figure 1 which shows the reaction scheme for the preparation of the preferred supported catalyst components based on bis(indenyl) dichlorosilane.

The silicon containing metallocene catalyst component prepared according to the process of the present invention may typically have the following structure:

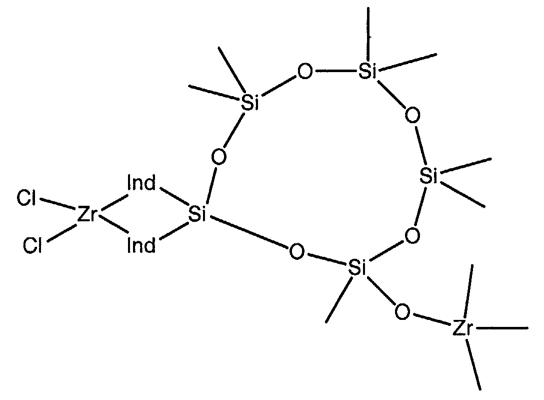

The metallocene catalyst component may be used for the polymerisation of olefins in the presence of any suitable activator component well known for use with metallocene catalysts.

Preferred activator components are aluminoxanes for example methyl aluminoxane (MAO).

Other activator components include boron compounds for example boranes such as tris(pentafluorophenyl) borane or borates such as tributyl ammonium tetrephenylborate.

The metallocene components of the present invention may be used for the polymerisation of olefins in either the solution, slurry or gas phase.

The metallocene components are most suitable for operation in the gas phase. Gas phase processes for the polymerisation of olefins , especially for the homopolymerisation and the copolymerisation of ethylene and α-olefins for example 1-butene, 1-hexene, 4-methyl-1-pente are well known in the art. Particularly preferred gas phase processes are those operating in a fluidised bed. Examples of such processes are described in EP 89691 and EP 699213 the latter being a particularly preferred process for use with the supported catalysts of the present invention.

Particularly preferred polymerisation processes are those comprising the polymerisation of ethylene or the copolymerisation of ethylene and α-olefins having from 3 to 10 carbon atoms.

The present invention will be further described by reference to the following examples:

### Example 1

### Preparation of support

In a glove box , zirconium tetrachloride (0,18 mmol) and bis(indenyl)dichlorosilane* (1.01 mmol) were introduced into a Schlenk tube. The tube was connected to a vacuum/N₂ line and dimethyldichlorosilane (4.51 mmol) and tetraethoxysilane (2.83 mmol) were successively added via syringes. The mixture was stirred for 5 minutes and transferred via a syringe to another tube which was then sealed under vacuum. The sealed tube was introduced in a steel envelope and held in an oven at 110 - 115°C. After 8 days the tube was opened in a glove box under N₂ and the resultant gel dried under vacuum at room temperature for 6 hrs. The chemical composition of the gel was as follows:

| Elemental Analysis | C | H | Cl | Si | Zr | O |
|---|---|---|---|---|---|---|
| | 31.96 | 5.34 | 2.36 | 30.75 | 1.4 | 28.19 |

The analysis indicated that the indenyl groups are bound to the network of silica. NB. * prepared according to Organometallics 1993, 12, 4607-4612.

### Example 2

### Preparation of Metallocene catalyst component

1.94 mmol of n-butyl lithium was added dropwise at room temperature to 163 mg. of the gel, prepared in example 1, in suspension of pentane (nBuLi/Indenyl = 5.5). The reaction mixture was kept under reflux for 7 hrs. The solvent was removed under vacuum and the solid washed with 3 aliquots of 8 ml. pentane and then dried under vacuum at room temperature for 1 hr.

To the suspension of the resulting solid in 10 ml tetrahydofuran, 177 mmol ZrCl₄.2THF in tetrahydrofuran were added dropwise at room temperature. The mixture was then stirred for 1 hr. The resultant solid was then filtered washed with 2 aliquots of 10 ml. tetrahydrofuran and dried under vacuum.

### Example 3

### Polymerisation

In a Schlenk tube were introduced 6.8 mg. of the metallocene catalyst component, prepared in example 2, (6.3 mmol Ind₂ZrCl₂), 50 ml toluene and 4.2 ml of methyl aluminoxane (Al/Zr = 1000). After stirring for 10 min. the system was degassed. The mixture was held at 60°C and a continuous flow of ethylene (pressure = 1 bar) was maintained. After 1 hr. the polymerisation was terminated by adding acidic ethanol. The precipitated polymer was filtered and dried under vacuum for 8 hr. at room temperature. 1.01 g. of polyethylene was obtained corresponding to an activity of 1.75 kgPE/(gZr.h..bar).

The polymer was characterised as having Mn = 44800, Mw = 124100 and MWD = 2.8.

## Claims

1. A process for the preparation of a silicon containing metallocene catalyst component, said process comprising the steps of
(a) non-hydrolytic sol-gel condensation of a (cyclopentadienyl) dihalogenated silane with an halogenated silane and an alkoxysilane,
(b) deprotonation, and
(c) addition of a Group IVA metal compound.
